# EUROPÄISCHE PATENTANMELDUNG

(11) **EP 3 270 182 A1**
(43) Veröffentlichungstag der Anmeldung: **17.01.2018**
(21) Anmeldenummer: 17176578.7
(22) Anmeldetag: 19.06.2017
(51) Int. Cl.: G01S 17/42, G01S 7/486

(54) **OPTOELEKTRONISCHER SENSOR UND VERFAHREN ZUR ERFASSUNG EINES OBJEKTS IN EINEM ÜBERWACHUNGSBEREICH**

(30) Priorität: 15.07.2016 DE 102016113131
(71) Anmelder: Sick AG, 79183 Waldkirch (DE)
(72) Erfinder: Tschuch, Dr. Sebastian, 79104 Freiburg (DE)

(57) **Zusammenfassung**

Es wird ein optoelektronischer Sensor (10) zur Erfassung eines Objekts (16) in einem Überwachungsbereich (14) mit einem Lichtempfänger (18), der eine Vielzahl von Lawinenphotodiodenelementen (20) zur Erfassung von Empfangslicht aus dem Überwachungsbereich (14) aufweist, die jeweils mit einer Vorspannung oberhalb einer Durchbruchspannung vorgespannt und somit in einem Geiger-Modus betrieben sind, und mit einer Steuer- und Auswerteeinheit (22) zur Auswertung eines Empfangssignals des Lichtempfängers (18) angegeben. Dabei ist eine Empfindlichkeits-Einstelleinheit (24) vorgesehen, mittels derer die Empfindlichkeit des Lichtempfängers (18, 20) durch Einstellen der Vorspannung veränderbar ist, wobei die Steuer- und Auswerteeinheit (22) dafür ausgebildet ist, die Empfindlichkeit anhand eines erwarteten Abstands des Objekts (16) dynamisch anzupassen.

## Beschreibung

Die Erfindung betrifft einen optoelektronischen Sensor und ein Verfahren zur Erfassung eines Objekts in einem Überwachungsbereich nach dem Oberbegriff von Anspruch 1 beziehungsweise 11.

Optoelektronische Sensoren gibt es in einem breiten Spektrum, das von eindimensionalen Lichtschranken und Lichttastern über Laserscanner bis zu Kameras reicht. Über die reine Objekterfassung hinaus wird in entfernungsmessenden Systemen auch eine Distanz zu dem Objekt bestimmt. Distanzsensoren nach dem Lichtlaufzeitprinzip messen dazu die Laufzeit eines Lichtsignals, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Die Grenze zwischen den beiden Verfahren lässt sich aber nicht immer scharf ziehen, denn etwa bei komplexen Pulsmustern wird ein Pulslaufzeitverfahren einem Phasenverfahren ähnlicher als einer klassischen Einzelpulsmessung.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Um auch geringe Empfangsintensitäten nachweisen zu können, werden herkömmlich in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Bezüglich dieser und weiterer allgemeiner Eigenschaften von SPADs sei beispielhaft auf den Artikel Eisele, Andreas, et al. "185 MHz count rate, 139 dB dynamic range single-photon avalanche diode with active quenching circuit in 130 nm CMOS technology." Int. Image Sensor Workshop (IISW), Onuma, Hokkaido, 2011 verwiesen.

Eine SPAD zählt somit wie ein Geigerzähler Einzelereignisse. SPADs sind nicht nur hochempfindlich, sondern auch vergleichsweise kostengünstig. Zudem lassen sie sich mit wenig Aufwand auf einer Leiterkarte integrieren. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal. Um diese Auswirkungen zu begrenzen, werden in der Praxis mehrere SPADs gemeinsam ausgewertet. Nach einem starken Empfangssignal befinden sich aber dennoch zumindest nahezu alle Zellen in ihrer Erholungsphase, und die Sensitivität des Lichtempfängers kehrt erst langsam zurück. Die Empfindlichkeit des Systems hat also ein Gedächtnis auf der Zeitskala der Totzeit. Außerdem werden durch die extrem hohe Verstärkung hohe Empfangsströme mit einer erheblichen Verlustleistung und damit Wärmeentwicklung erzeugt.

Die DE 10 2009 029 372 A1 offenbart eine Messvorrichtung zur Messung einer Entfernung mit Hilfe optischer Messstrahlung mit einer Empfangsvorrichtung, die eine Vielzahl von SPADs aufweist. Mehrere SPADs können in einem Pixel zusammengefasst sein, wobei die Anzahl der beteiligten SPADs über die Empfangseinrichtung variieren kann, um die effektive Pixelfläche entsprechend einer erwarteten auftreffenden Lichtintensität anzupassen. Dadurch ergibt sich jedoch eine variable Ortsauflösung und ein relativ komplexes Auswertungsverfahren.

In der EP 1 860 462 A1 wird ein weiterer Distanzmesser vorgestellt, der in einigen Ausführungsformen SPADs als Detektoren einsetzt. Dabei erfolgt eine Mehrfachmessung in Teilintervallen, die sukzessive verkürzt werden. Außerdem kann eine Empfangsoptik mit in Abhängigkeit von der Distanz zum Ziel verstellbarer Pupilleneinstellung verwendet werden. Das Vorgehen ist also recht kompliziert und nutzt die besonderen Eigenschaften von SPADs nur teilweise zu seinem Vorteil.

Es ist daher Aufgabe der Erfindung, einen optoelektronischen Sensor mit Lawinenphotodioden im Geigermodus beziehungsweise SPADs mit verbesserten Messeigenschaften anzugeben.

Diese Aufgabe wird durch einen optoelektronischen Sensor und ein Verfahren zur Erfassung eines Objekts in einem Überwachungsbereich nach Anspruch 1 beziehungsweise 11 gelöst. Die Erfindung geht von dem Grundgedanken aus, dass durch Anpassung der Vorspannung nicht nur die Verstärkung, sondern auch der Quantenwirkungsgrad und damit die Empfindlichkeit eines SPAD-Empfängers einstellbar ist. Denn je höher die Vorspannung ist, umso wahrscheinlicher wird es, dass ein einfallendes Photon auch tatsächlich eine Lawine auslöst. Die Steuer- und Auswerteeinheit passt dynamisch über die Vorspannung die Empfindlichkeit entsprechend dem Abstand des erfassten oder zu erfassenden Objekts an. Die notwendigen Informationen über den Objektabstand können je nach Ausführungsform auf vielfältige Weise zur Verfügung stehen, sei es durch Messung, Vorgabe, Annahme oder indem nacheinander die Empfindlichkeit für verschiedene Abstände eingestellt wird. Eine Beziehung zwischen einer jeweils einzustellenden Empfindlichkeit und der dafür erforderlichen Vorspannung kann vorbekannt oder eingelernt und beispielsweise als Tabelle (LUT, Lookup Table) hinterlegt sein. Alternativ wird die Empfindlichkeit anhand eines Signal-zu-Rausch-Verhältnisses eines Empfangssignals des SPAD-Empfängers eingestellt. Das entspricht hier dem Verhältnis von wieder empfangenem Sendelicht, dem gewünschten Signal, zu dem Umgebungslicht, da letzteres maßgeblichen Anteil am Rauschen hat. In Situationen mit einem großen Signal-zu-Rausch-Verhältnis ist eine geringe Empfindlichkeit des SPAD-Empfängers für eine erfolgreiche Detektion ausreichend. Ist das Signal-zu-Rausch-Verhältnis hingegen gering, ist eine hohe Empfindlichkeit vorteilhaft, um keine Information zu verlieren.

Die Erfindung hat den Vorteil, dass der Sensor besonders gut an die tatsächlichen Lichtsignale angepasst ist. Da die Vorspannung sehr schnell verändert werden kann, ist die Anpassung hoch dynamisch möglich. Zudem ist die Vorspannung gut zugänglich und damit eine einfache Umsetzung der Erfindung möglich. Insbesondere wird durch die angepasste Empfindlichkeit oder Sensitivität eine Übersteuerung für nahe Objekte und eine mangelnde Empfindlichkeit für ferne Objekte sehr einfach und wirkungsvoll vermieden.

Der Sensor ist vorzugsweise ein entfernungsmessender Sensor mit einem Lichtsender zum Aussenden eines Lichtsignals, wobei die Steuer- und Auswertungseinheit dafür ausgebildet ist, aus einer Lichtlaufzeit zwischen Aussenden des Lichtsignals und Empfangen des von dem Objekt aus dem Überwachungsbereich remittierten Lichtsignals einen Abstand des Objekts zu bestimmen. Bei einem solchen Sensor ist der erwartete Abstand, an den die Empfindlichkeit erfindungsgemäß angepasst wird, ganz besonders relevant, weil der tatsächliche Abstand die Messgröße eines solchen Sensors ist. Daher bewirkt diese Anpassung auch eine besonders deutliche Verbesserung.

Das Lichtsignal weist bevorzugt einen Lichtpuls auf. Der Sensor misst also Entfernungen nach dem Pulsverfahren. Dabei sind auch kompliziertere Formen wie Doppelpulse oder sogar Pulscodes denkbar. Es können auch mehrere Lichtpulse nacheinander ausgesandt, empfangen und die jeweiligen Einzelergebnisse gemeinsam statistisch ausgewertet werden, etwa in einem Pulsmittelungsverfahren. Alternativ ist ein Phasenverfahren denkbar, denn auch hier hängt die Empfangsintensität von der Objektentfernung ab.

Die Steuer- und Auswerteeinheit ist bevorzugt dafür ausgebildet, die Empfindlichkeit von einer geringen Empfindlichkeit im Nahbereich zu einer hohen Empfindlichkeit im Fernbereich zu variieren. Die Empfindlichkeit ist besonders bevorzugt gerade so austariert, dass ein Objekt direkt vor dem Sensor den Lichtempfänger nicht übersteuert, was im Zusammenhang mit einem SPAD-Detektor bedeutet, zumindest einen Großteil der Zellen in die Totzeit zu versetzen, und in hoher Reichweite eine maximale Empfindlichkeit erreicht wird. Dazwischen sollte die Empfangsleistung monoton ansteigen. Diese abstandsabhängige Sollempfindlichkeit kann pro Geräteklasse oder sogar individuell je Einzelgerät eingelernt werden. Alternativ wird beispielsweise einfach mit einer minimalen Vorspannung knapp oberhalb der Durchbruchsspannung im Nahbereich, einer deutlich erhöhten Vorspannung im Fernbereich und interpolierten Zwischenwerten gearbeitet.

Die Steuer- und Auswertungseinheit ist bevorzugt dafür ausgebildet, die Empfindlichkeit kontinuierlich oder in Stufen von geringer Empfindlichkeit zu hoher Empfindlichkeit zu variieren. Die Variation der Empfindlichkeit erfolgt also in einer Art Rampe. Das ist vor allem dann sinnvoll, wenn über die tatsächliche Objektentfernung nichts bekannt ist. Die Rampe kann sich zyklisch wiederholen, sei es innerhalb einer Messung oder über eine oder mehrere Messungen. Eine kontinuierliche Rampe ermöglicht eine genauere Anpassung, während eine gestufte Rampe der SPAD etwas Zeit gibt, sich auf die neue Empfindlichkeit einzustellen.

Die Steuer- und Auswertungseinheit ist bevorzugt dafür ausgebildet, die Empfindlichkeit zunächst gering einzustellen und dann entsprechend der Ausbreitungsgeschwindigkeit von Licht im Überwachungsbereich zu erhöhen. Das ist besonders geeignet für ein pulsbasiertes Lichtlaufzeitverfahren. Die Empfindlichkeit passt dann für alle potentiellen Empfangszeiten zu der Entfernung eines Objekts, das in diesem Moment erfasst würde. Praktisch kann dafür zunächst theoretisch oder durch Messung eine Beziehung bestimmt werden, wie stark die Empfangsintensität mit der Entfernung abnimmt. Diese ortsabhängige Beziehung ist über die Lichtgeschwindigkeit direkt in eine zeitabhängige Beziehung umrechenbar. Dabei sollte aber darauf geachtet werden, dass effektiv nur die halbe Lichtgeschwindigkeit zum Tragen kommt, weil auch der Rückweg eines am Objekt remittierten Lichtsignals berücksichtigt werden muss. Die relevante Ausbreitungsgeschwindigkeit ist typischerweise die Vakuumlichtgeschwindigkeit, aber eine langsamere Lichtgeschwindigkeit in anderen Medien prinzipiell denkbar.

Die Steuer- und Auswertungseinheit ist bevorzugt dafür ausgebildet, die Empfindlichkeit innerhalb einer Messung anzupassen. Die soeben erläuterte Ausführungsform mit dynamischer Anpassung der Empfindlichkeit an die Zeit seit Aussenden eines Lichtpulses ist dafür ein Beispiel. Solche Anpassungen sind also sehr schnell.

Die Steuer- und Auswertungseinheit ist bevorzugt dafür ausgebildet, die Empfindlichkeit zwischen zwei Messungen anzupassen. Das ist eine langsamere dynamische Anpassung, die auch auf eine Trägheit der SPADs, wie etwa durch Halbwertszeiten von Ladungsträgerpaaren Rücksicht nimmt. Die Anpassung erfolgt dabei vorzugsweise bei einem entfernungsmessenden Sensor anhand des letzten Messergebnisses. Schnelle und langsame Anpassungen schließen einander nicht zwingend aus, sondern können unter Umständen auch kombiniert werden, beispielsweise indem der schnellen Anpassung durch die langsame Anpassung ein Rahmen oder ein Offset vorgegeben wird.

Der Sensor ist bevorzugt als Laserscanner mit einem Lichtsender und einer beweglichen Ablenkeinheit zur periodischen Ablenkung des Lichtstrahls in dem Überwachungsbereich ausgebildet. Als Scanmechanismus kommen alle bekannten Konzepte wie Schwing- und Drehspiegel oder beweglicher Messkopf in Betracht. Üblicherweise wird auch das Empfangslicht periodisch abgelenkt, wobei es aber auch Scanner gibt, die einen statischen Matrixchip benutzen und durch elektronische Ansteuerung je nach Messrichtung eine aktive Pixelgruppe nachführen. Ein Laserscanner ist vorzugsweise entfernungsmessend, hat also ein Lichtlaufzeitverfahren implementiert. Dabei ist dann die in den beiden vorigen Absätzen erläuterte schnelle und/oder langsame Dynamik denkbar. Die schnelle Dynamik macht keine Annahmen über die zu messenden Abstände. Die langsame Dynamik nimmt an, dass zwei direkt aufeinanderfolgende Abtastungen in aller Regel dasselbe Objekt treffen. An einer Kante trifft das nicht zu, aber die noch fälschlich auf die Kante eingestellte Empfindlichkeit funktioniert zumindest auch nicht schlechter als eine herkömmliche konstante Empfindlichkeit.

Die Lawinenphotodiodenelemente sind bevorzugt rotempfindlich. Das ist ein Typ von SPADs, wie beispielsweise in der eingangs zitierten Arbeit Eisele et al. beschrieben, welche deutlich die Eigenschaft zeigen, dass mit der Vorspannung auch der Quantenwirkungsgrad, damit die Auslösungswahrscheinlichkeit und letztlich die Empfindlichkeit variiert. Damit eignen sich diese SPADs besonders für das erfindungsgemäße Vorgehen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung eines optoelektronischen Sensors;
- Fig. 2: ein vereinfachtes Blockschaltbild einer Lawinendiode im Geigermodus oder SPAD;
- Fig. 3: ein beispielhafter zeitlicher Verlauf der Lichtleistung (oben) und der entfernungsabhängig angepassten Vorspannung und damit Empfindlichkeit des Lichtempfängers (unten); und
- Fig.4: eine schematische Blockdarstellung einer Ausführungsform des optoelektronischen Sensors als Laserscanner.

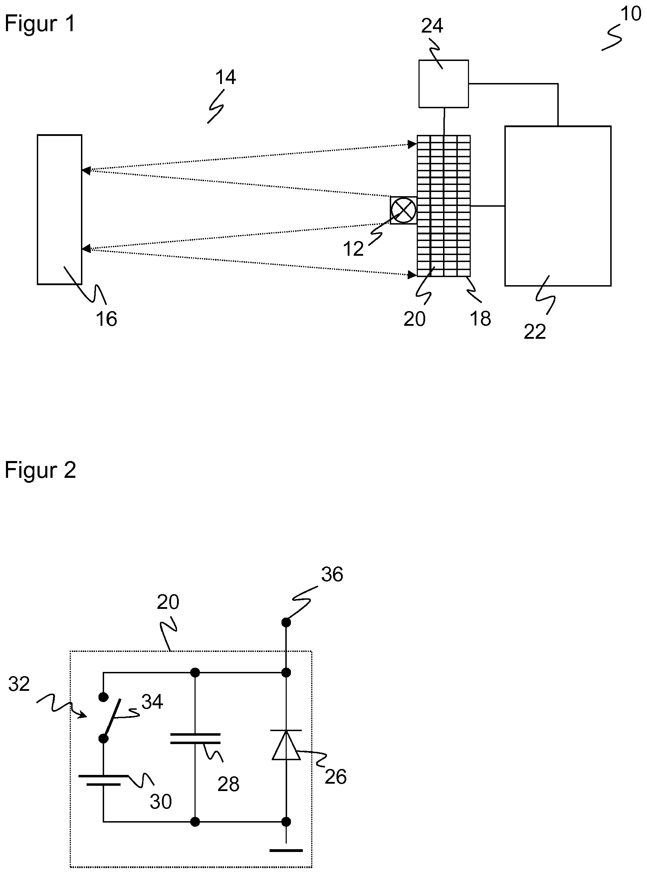

In Figur 1 zeigt eine sehr vereinfachte schematische Blockdarstellung eines optoelektronischen Sensors 10 in einer Ausführungsform als einstrahliger Lichttaster. Ein Lichtsender 12, beispielsweise eine LED oder eine Laserlichtquelle, sendet ein Lichtsignal in einen Überwachungsbereich 14 aus. Trifft es dort auf ein Objekt 16, so wird ein Teil des Lichtsignals remittiert oder reflektiert und kehrt zu einem Lichtempfänger 18 zurück. Dieser Lichtempfänger 18 weist eine Vielzahl von Lichtempfangselementen auf, die als Lawinenphotodiodenelemente 20 im Geigermodus oder SPADs ausgebildet sind. Die Empfangssignale der Lawinenphotodiodenelemente 20 werden von einer Steuer- und Auswertungseinheit 22 ausgelesen und dort ausgewertet. Außerdem ist die Steuer- und Auswertungseinheit 22 mit einer Einstelleinheit 24 verbunden, mittels derer eine Vorspannung an die Lawinenphotodiodenelemente 20 angelegt und verändert werden kann.

Die Auftrennung in Lichtempfänger 18, Steuer- und Auswertungseinheit 22 und Einstelleinheit 24 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodioden 20 und einzelnen oder Gruppen von Lawinenphotodioden 20 zugeordnete Schaltkreise zu deren Auswertung und Ansteuerung teilen. Die optische Anordnung mit einem Lichtsender 12, der einen kleinen Anteil des Lichtempfängers 18 verdeckt, ist rein beispielhaft. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Der Sensor 10 ist bevorzugt entfernungsmessend. Dazu bestimmt die Steuer- und Auswertungseinheit 22 eine Lichtlaufzeit von Aussenden eines Lichtsignals bis zu dessen Empfang und rechnet dies über die Lichtgeschwindigkeit in einen Abstand um. Mehrere Sensoren 10 können kombiniert werden, um ein tastendes Lichtgitter mit mehreren, meist parallelen Strahlen zu bilden, welches in jedem Strahl Entfernungen misst oder überwacht. Auch mobile Systeme sind denkbar, bei denen der Sensor 10 beweglich montiert ist.

Figur 2 zeigt ein beispielhaftes vereinfachtes Ersatzschaltbild einer einzelnen Lawinenphotodiode 20 im Geiger-Modus. In der Praxis handelt es sich um ein Halbleiterbauteil, dessen nicht dargestellter Aufbau hier als bekannt vorausgesetzt wird. Die Lawinenphotodiode 20 zeigt zum einen das Verhalten einer Diode 26. Sie hat eine Kapazität, die durch einen parallel geschalteten Kondensator 28 repräsentiert wird. Der mögliche Lawinendurchbruch erzeugt Ladungsträger, deren Ursprung in dem Ersatzschaltbild als Stromquelle 30 dargestellt wird. Der Lawinendurchbruch wird durch ein auftreffendes Photon 32 ausgelöst, wobei dieser Vorgang wie ein Schalter 34 wirkt. Es gibt dann verschiedene Möglichkeiten, das Ausgangssignal 36 zu betrachten, auf die hier nicht näher eingegangen wird.

Im Bereitschaftszustand liegt über der Diode 26 eine Spannung oberhalb der Durchbruchspannung an. Erzeugt dann ein einfallendes Photon 32 ein Ladungsträgerpaar, so schließt dies gleichsam den Schalter 34, so dass die Lawinenphotodiode 20 über die Stromquelle 30 mit Ladungsträgern geflutet wird. Neue Ladungsträger entstehen aber nur, solange das elektrische Feld stark genug bleibt. Wird durch die Stromquelle 30 der Kondensator 28 so weit entladen, dass die Durchbruchspannung unterschritten ist, so kommt die Lawine von selbst zum Erliegen ("passive quenching"). Danach lädt sich der Kondensator 28 wieder auf, bis wieder eine Spannung über der Durchbruchspannung an der Diode 26 anliegt. Es gibt alternative Ausgestaltungen, in denen die Lawine von außen erkannt und daraufhin eine Entladung unter die Durchbruchspannung ausgelöst wird ("active quenching").

Eine Vorspannung oberhalb der Durchbruchspannung ist demnach notwendige Voraussetzung einer durch einzelne Photonen 32 auslösbare Lawine. Dennoch handelt es sich nicht einfach um eine binäre Bedingung. Je weiter die Vorspannung oberhalb der Durchbruchspannung liegt, umso stärker wird die Lawine, weil auf dem Kondensator 28 mehr Ladung verfügbar ist, ehe die Spannung unter die Durchbruchspannung fällt und die Lawine damit erlischt. Die Vorspannung beeinflusst demnach die Verstärkung. Änderungen der Vorspannung wirken sich aber auch auf den Quantenwirkungsgrad der Lawinenphotodiode 20 aus, weil die Größe der sich ausbildenden Driftzone ebenfalls von der Höhe der Vorspannung abhängt. Das bedeutet, dass die Wahrscheinlichkeit einer Lawinenauslösung durch ein Photon 32 mit der Vorspannung steigt. Deshalb kann über die Vorspannung die Empfindlichkeit der Lawinenphotodiode 20 gesteuert werden. Der soeben beschriebene Effekt zeigt sich besonders deutlich beispielsweise bei rotempfindlichen SPADs, wobei für weitere Einzelheiten auf die Literatur, etwa die einleitend genannte Arbeit von Eisele verwiesen wird.

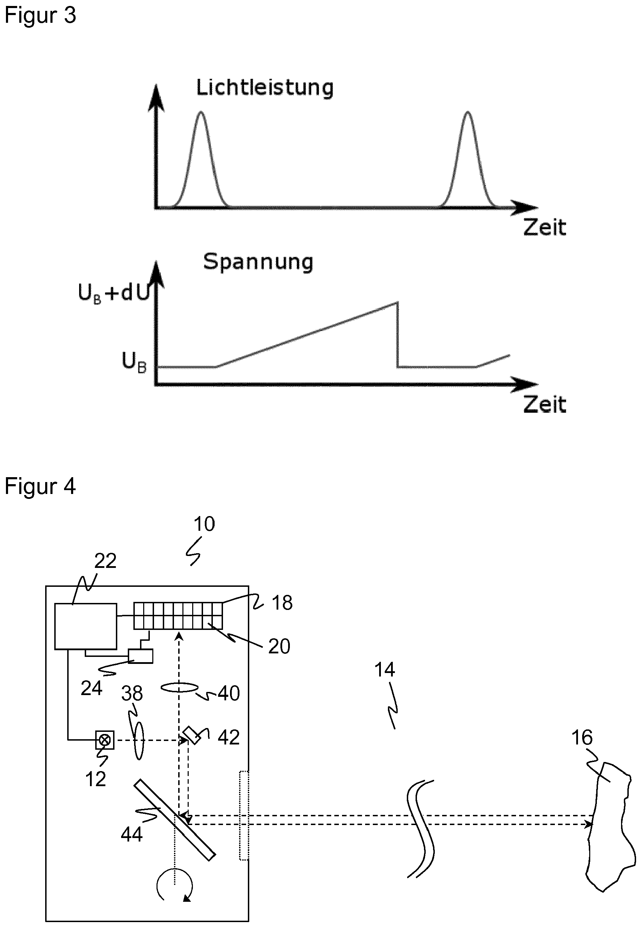

Figur 3 illustriert eine mögliche dynamische Anpassung der Sensitivität während der Messung. Das empfangene Lichtsignal eines optoelektronischen Sensors 10 ist oft stark abhängig von der Entfernung des erfassten Objekts 16, weil das Sendelicht nicht oder jedenfalls nicht perfekt kollimiert ist und meist von dem Objekt 16 durch diffuse Remission nur ein kleiner Anteil zurückgeworfen wird. In aller Regel wird daher im Nahbereich sehr viel Signal empfangen, während im Fernbereich das Signal abnimmt. Die maximale Reichweite bei einer gegebenen Remission ist durch das kleinste noch detektierbare Signal bestimmt. Die Vorspannung kann genutzt werden, um die Empfindlichkeit der Lawinenphotodioden 20 entsprechend auf einen Abstand eines Objekts 16 anzupassen.

Um ein Beispiel zu geben, ist im oberen Teil der Figur 3 ist ein zeitlicher Verlauf der ausgesandten Lichtleistung bei einem pulsbasierten Lichtlaufzeitverfahren dargestellt. Konkret gezeigt sind zwei Pulse von aufeinanderfolgenden Messungen. Im unteren Teil der Figur 3 ist ein vorteilhafter Verlauf der Vorspannung gegen die Zeit aufgetragen. Dabei bezeichnet U_{B} eine Basisspannung bei oder knapp oberhalb der Durchbruchspannung und dU die variable Anpassung der Vorspannung.

Dem unteren Verlauf der Vorspannung folgend wird demnach in dieser Ausführungsform direkt nach dem Aussenden eines Lichtpulses mit einer niedrigen Empfindlichkeit gearbeitet, die dann ansteigt, ehe sich diese Rampe für die Folgemessung wiederholt. Die jeweilige Amplitude der Rampe, d.h. dU, sollte vorzugsweise so bemessen sein, dass im Nahbereich ausreichend Signal empfangen wird und bei maximaler Reichweite eine möglichst hohe Empfindlichkeit erreicht ist. Die Zeitinformation der X-Achse lässt sich auch als Abstand auffassen, da beides über die Lichtgeschwindigkeit ineinander umrechenbar ist, wobei allerdings ein Faktor zwei für Hin- und Rückweg des Lichts berücksichtigt werden muss. Die Rampe zeigt demnach die Empfindlichkeit, mit der ein Objekt 18 gemessen würde, wenn es sich im entsprechenden Abstand befindet. Es ist auch denkbar, anstelle eines linearen Verlaufs der Rampe eine kompliziertere Funktion zu wählen.

Bedingt durch die Lichtgeschwindigkeit ist die Anpassung gemäß Figur 3 sehr schnell. Eine lange Ladungsträgerlebensdauer in dem Halbleiter der Lawinenphotodiode 20 könnte derart hochdynamische Anpassungen einschränken, d.h. möglicherweise löst eine Lawinenphotodiode 20 bei Erhöhung der Vorspannung noch fälschlich aufgrund eines früher empfangenen Photons aus, das ein noch nicht rekombiniertes Ladungsträgerpaar erzeugt hatte. Es hängt von der konkreten Anwendung ab, ob ein solches Störereignis beispielsweise durch statistische Auswertung vieler Lawinenphotodioden 20 aufgefangen werden kann. Prinzipiell muss der Sensor 10 mit ähnlichen Ereignissen durch Dunkelrauschen oder Umgebungslicht ohnehin umgehen können.

In manchen Anwendungen kann es dennoch vorteilhaft sein, die Empfindlichkeit auf einer langsameren Zeitskala anzupassen. Dabei wird beispielsweise Vorwissen aus früheren Messungen genutzt, um die Empfindlichkeit auf den tatsächlichen Abstand des Objekts 18 einzustellen und die Messung dadurch zu verfeinern.

Weiterhin ist denkbar, die Empfindlichkeit anhand eines Signal-zu-Rausch-Verhältnisses einzustellen. Vor allem der variable Anteil des Rauschens wird maßgeblich durch das Umgebungslicht verursacht. Andere Anteile wie ein Dunkelrauschen sind gleichmäßiger. Eine Bestimmung des Umgebungslichts, etwa durch Messung mit dem Lichtempfänger 18 ohne Aussenden von Lichtsignalen durch den Lichtsender 12 ermöglicht daher eine gute Schätzung des Signal-zu-Rausch-Verhältnisses. Eine andere Möglichkeit ist, das Empfangssignal selbst zu bewerten und ein zu hohes Signal-zu-Rausch-Verhältnis beispielsweise dann anzunehmen, wenn sich das Empfangssignal nicht von einem reinen Zufallssignal unterscheidet beziehungsweise darin keine Anteile des wieder empfangenen eigenen Lichtsignals des Lichtsenders 12 aufzufinden sind. Umgekehrt ist die Empfindlichkeit zu hoch, wenn das Empfangssignal übersteuert, also insbesondere zu viele Lawinenphotodioden 20 auslösen.

Figur 4 zeigt einen Laserscanner als weitere Ausführungsform eines optoelektronischen Sensors 10. Lichtsender 12 und Lichtempfänger 18 ist jeweils eine Optik 38, 40 zugeordnet, wobei derartige Optiken üblicherweise auch bei einem eindimensionalen Sensor 10 gemäß Figur 1 vorgesehen sind. Der Scanstrahl des Lichtsenders 12 wird über eine erste Ablenkeinheit 42 eingekoppelt und über eine zweite Ablenkeinheit 44 in den Überwachungsbereich 14 gelenkt. Die beispielsweise als Spiegel ausgebildete zweite Ablenkeinheit 44 ist drehbar gelagert, so dass der Scanstrahl periodisch über eine Scanebene geführt wird. Dabei ist die drehbare zweite Ablenkeinheit 44 mit einem Encoder versehen, so dass die Winkellage stets bekannt ist. Die erste Ablenkeinheit 42 verdeckt nur einen vernachlässigbar kleinen Anteil des reflektierten Scanstrahls, der somit nahezu vollständig nach erneuter Ablenkung an der zweiten Ablenkeinheit 44 auf den Lichtempfänger 18 trifft und in der Steuer und Auswertungseinheit 22 ausgewertet wird, um die Entfernung des Objekts 16 zu bestimmen. Auf diese Weise gewinnt der Laserscanner anhand der Winkellage und der Abstände Entfernungsprofile in seiner Scanebene. Es sind zahlreiche abweichende Aufbauten von Laserscannern bekannt, beispielsweise mit einem drehbaren Spiegelpolygonrad oder einem insgesamt drehenden Messkopf mit Lichtsender 12 und/oder Lichtempfänger 18, die von der Erfindung ebenfalls umfasst sind.

Über die Einstelleinheit 24 kann die Vorspannung des Lichtempfängers 18 variiert und damit dessen Empfindlichkeit eingestellt werden. Dazu ist insbesondere die hochdynamische Anpassung innerhalb der einzelnen Pulslaufzeitmessungen denkbar, die anhand der Figur 3 erläutert wurde. Zusätzlich oder alternativ kann auch eine langsame dynamische Anpassung erfolgen, welche die Empfindlichkeit für jede Messung neu einstellt. Da sich die Umgebung nicht schlagartig ändert, kann dafür die Messinformation zumindest des vorhergehenden Scanwinkels genutzt werden. Die Annahme dabei ist, dass dasselbe Objekt 16 im nächsten Winkel erneut angetastet wird. Stimmt die Annahme in manchen Winkelpositionen nicht, etwa an Objektkanten, so ergibt sich lediglich eine nicht angepasste Einzelmessung. Durch die langsame Anpassung der Empfindlichkeit können die Ströme in den Lawinenphotodioden 20 bei stark reflektierenden Objekten 16 oder auch bei starkem Umgebungslicht begrenzt werden.

## Patentansprüche

1. Optoelektronischer Sensor (10) zur Erfassung eines Objekts (16) in einem Überwachungsbereich (14) mit einem Lichtempfänger (18), der eine Vielzahl von Lawinenphotodiodenelementen (20) zur Erfassung von Empfangslicht aus dem Überwachungsbereich (14) aufweist, die jeweils mit einer Vorspannung oberhalb einer Durchbruchspannung vorgespannt und somit in einem Geiger-Modus betrieben sind, und mit einer Steuer- und Auswerteeinheit (22) zur Auswertung eines Empfangssignals des Lichtempfängers (18), **gekennzeichnet durch**
eine Empfindlichkeits-Einstelleinheit (24), mittels derer die Empfindlichkeit des Lichtempfängers (18, 20) durch Einstellen der Vorspannung veränderbar ist, wobei die Steuer- und Auswerteeinheit (22) dafür ausgebildet ist, die Empfindlichkeit anhand eines erwarteten Abstands des Objekts (16) oder eines Signal-zu-Rausch-Verhältnisses eines Empfangssignals des Lichtempfängers (18, 20) dynamisch anzupassen.

2. Sensor (10) nach Anspruch 1,
der ein entfernungsmessender Sensor mit einem Lichtsender (12) zum Aussenden eines Lichtsignals ist, wobei die Steuer- und Auswertungseinheit (22) dafür ausgebildet ist, aus einer Lichtlaufzeit zwischen Aussenden des Lichtsignals und Empfangen des von dem Objekt (16) aus dem Überwachungsbereich (14) remittierten Lichtsignals einen Abstand des Objekts (16) zu bestimmen.

3. Sensor (10) nach Anspruch 2,
wobei das Lichtsignal einen Lichtpuls aufweist.

4. Sensor (10) nach einem der vorhergehenden Ansprüche,
wobei die Steuer- und Auswerteeinheit (22) dafür ausgebildet ist, die Empfindlichkeit von einer geringen Empfindlichkeit im Nahbereich zu einer hohen Empfindlichkeit im Fernbereich zu variieren.

5. Sensor (10) nach einem der vorhergehenden Ansprüche,
wobei die Steuer- und Auswertungseinheit (22) dafür ausgebildet ist, die Empfindlichkeit kontinuierlich oder in Stufen von geringer Empfindlichkeit zu hoher Empfindlichkeit zu variieren.

6. Sensor (10) nach einem der vorhergehenden Ansprüche,
wobei die Steuer- und Auswertungseinheit (22) dafür ausgebildet ist, die Empfindlichkeit zunächst gering einzustellen und dann entsprechend der Ausbreitungsgeschwindigkeit von Licht im Überwachungsbereich (14) zu erhöhen.

7. Sensor (10) nach einem der vorhergehenden Ansprüche,
wobei die Steuer- und Auswertungseinheit (22) dafür ausgebildet ist, die Empfindlichkeit innerhalb einer Messung anzupassen.

8. Sensor (10) nach einem der vorhergehenden Ansprüche,
wobei die Steuer- und Auswertungseinheit (22) dafür ausgebildet ist, die Empfindlichkeit zwischen zwei Messungen anzupassen.

9. Sensor (10) nach einem der vorhergehenden Ansprüche,
der als Laserscanner mit einem Lichtsender (12) und einer beweglichen Ablenkeinheit (44) zur periodischen Ablenkung des Lichtstrahls in dem Überwachungsbereich (14) ausgebildet ist.

10. Sensor (10) nach einem der vorhergehenden Ansprüche,
wobei die Lawinenphotodiodenelemente (20) rotempfindlich sind.

11. Verfahren zur Erfassung eines Objekts (16) in einem Überwachungsbereich (14), bei dem ein Empfangssignal aus Licht aus dem Überwachungsbereich (14) mit einem Lichtempfänger (18) erzeugt wird, der eine Vielzahl von Lawinenphotodiodenelementen (20) zur Erfassung von Empfangslicht aus dem Überwachungsbereich (14) aufweist, die jeweils mit einer Vorspannung oberhalb einer Durchbruchspannung vorgespannt und somit in einem Geiger-Modus betrieben sind, und das Empfangssignal ausgewertet wird,
**dadurch gekennzeichnet,**
**dass** die Empfindlichkeit des Lichtempfängers (18, 20) durch Einstellen der Vorspannung anhand eines erwarteten Abstands des Objekts (16) oder eines Signal-zu-Rausch-Verhältnisses eines Empfangssignals des Lichtempfängers (18, 20) dynamisch angepasst wird.

12. Verfahren nach Anspruch 11,
wobei die Entfernung des Objekts (16) in einem Lichtlaufzeitverfahren bestimmt wird, indem ein Lichtpuls ausgesandt und die Lichtlaufzeit bis zum Empfang des von dem Objekt (16) aus dem Überwachungsbereich (14) remittierten Lichtsignals gemessen wird, und wobei die Empfindlichkeit beim Aussenden des Lichtpulses gering eingestellt und dann entsprechend der Ausbreitungsgeschwindigkeit des Lichtpulses im Überwachungsbereich (14) erhöht wird.
